# EUROPEAN PATENT SPECIFICATION

(11) **EP 3 736 614 B1**
(45) Date of publication and mention of the grant of the patent: **28.01.2026**
(21) Application number: 19906593.9
(22) Date of filing: 11.03.2019
(51) Int. Cl.: G02B 6/44

(54) **FUSION-FIT MODULE AND COMMUNICATION DEVICE**
FUSIONSPASSMODUL UND KOMMUNIKATIONSVORRICHTUNG
MODULE D'AJUSTEMENT PAR FUSION ET DISPOSITIF DE COMMUNICATION

(43) Date of publication of application: 11.11.2020
(73) Proprietor: HUAWEI TECHNOLOGIES CO., LTD., Shenzhen, Guangdong 518129 (CN)
(72) Inventor: SHU, Siwen, Guangdong 518129 (CN); YAN, Hongyu, Guangdong 518129 (CN); LIANG, Wei, Guangdong 518129 (CN)
(74) Representative: Gill Jennings & Every LLP
(86) International application number: PCT/CN2019/077712
(87) International publication number: WO 2020/181470

(56) References cited:
- WO-A1-2016/029171
- WO-A1-2017/103234
- WO-A1-2018/058507
- WO-A1-2018/187459
- CN-U- 205 715 097
- CN-U- 206 133 063
- CN-Y- 201 047 880
- US-A1- 2006 093 302
- US-A1- 2011 268 391
- US-A1- 2013 094 828
- US-A1- 2013 183 018
- US-A1- 2015 212 286

## Description

### TECHNICAL FIELD

This application relates to the field of communications technologies, and in particular, to an integrated splicing and termination module and a communications device.

### BACKGROUND

In an optical distribution network, an adapter is configured to implement connection between different nodes of an optical cable. To ensure connection quality of an optical fiber, an end face of a connector that is in the adapter and that is used to connect a connection point needs to be detected and cleaned. According to a conventional method in the market, an end face detection device and an end face cleaning tool are used to directly align with the end face of the adapter for detection and cleaning.

Currently, in an actual operation, adapters are fixedly designed in some modules due to functional requirements. For a single-layer adapter, a conventional device usually interferes with a mechanical part during end face detection and cleaning, and end face detection and cleaning cannot be performed. For a double-layer adapter or a multi-layer adapter, interference is more severe. Currently, a common method is to customize dedicated conversion adapters, detection devices, and cleaning devices. However, customization is unavoidably costly. Because an internal structure of the conversion adapter is complex and there is an optical device, a customization requirement is high. In addition, different conversion adapters need to be frequently replaced for different modules and cannot be produced on a large scale, and there is a defect that a device is prone to damage, and the like. Because different detection devices and cleaning devices are customized for modules with different functions, device compatibility is poor.

US2013094828 relates to fiber optic distribution terminal and method of deploying fiber distribution cable. US2015212286 relates to slidable fiber optic connection module with cable slack management. WO2016029171 relates to high density adapter carrier pack. WO2018187459 relates to optical splice and termination module. US2006093302 relates to optical fiber slack storage tray for distribution cabinet. WO2017103234 relates to telecommunications distribution elements. US2013183018 relates to fiber optic adapter block. US 20110268391A1 relates to optical fiber connection device.

### SUMMARY

This application provides an integrated splicing and termination module and a communications device, to resolve a problem of inconvenient detection and cleaning of an end face of an adapter.

The invention has been defined in the independent claims. Further specific technical features have been defined in the dependent claims.

According to a first aspect, an example implementation of this application provides an integrated splicing and termination module. The integrated splicing and termination module includes a tray, the tray is configured to carry a plurality of adapters, and the plurality of adapters are mounted on a bracket. To resolve the problem of inconvenient detection and cleaning of an end face of the adapter, in the integrated splicing and termination module in this application, a manner of mounting the bracket in the tray is changed. During specific disposing, the bracket in the integrated splicing and termination module is slidably mounted on the tray, so that the bracket may be moved out from the tray to detect and clean the end face of the adapter, and a device for cleaning and detecting the end face of the adapter operates in relatively large space. To control the sliding action of the bracket relative to the tray, an elastic hook is disposed on the tray, and the elastic hook is clamped to the bracket. When the end face of the adapter needs to be detected and cleaned, an operator exerts a force on the elastic hook, so that the elastic hook is away from the bracket, to unlock a sliding action of the bracket relative to the tray, and then moves out the bracket in a direction away from the tray. When the bracket slides to a specified position, the returned elastic hook cooperates with the tray to support the bracket, and the sliding action of the bracket ends. In this case, the end face of the adapter may be cleaned and detected. After the end face of the adapter is detected and cleaned, the operator exerts a force on the bracket in a direction towards the tray, the bracket returns to the tray, and the bracket is fastened when the elastic hook is clamped to the bracket. As can be learned from the foregoing description, by changing the manner of connecting the bracket and the tray and adding the elastic hook, the end face of the adapter can be detected and cleaned after the adapter is moved out, without interfering with the structure of the tray, thereby facilitating detection and cleaning of the end face of the adapter. In addition, the structure of the device for cleaning and detecting the adapter does not need to be changed, thereby reducing costs. At least one guide rod is disposed on the tray, a guide groove is disposed on the bracket, the guide rod is disposed in the guide groove, and the guide rod is slidably connected to the guide groove. The bracket is slidably connected to the tray by disposing the structural forms of the guide rod and the guide groove.

In a specific implementation, the bracket includes a top plate and a bottom plate that are disposed opposite to each other, and a plurality of side plates. Every two of the side plates are connected to the top plate and the bottom plate to form a cavity used to mount the adapter. The guide groove is disposed on two side plates located at an edge of the top plate. The guide groove is disposed on the side plates to implement the slidable connection between the bracket and the tray, and a structure is simple.

To help dispose a plurality of brackets, the integrated splicing and termination module further includes a spacer plate. The spacer plate is disposed on the tray and is configured to separate two brackets, the guide rod is disposed on two opposite side faces of the spacer plate, and one guide rod is slidably connected to the guide groove of one bracket. The plurality of brackets are slidably connected to the tray by using the spacer plate.

In a specific implementation, different forms may be selected for the elastic hook. For example, the elastic hook is a hook structure and includes a hook body and a hook part. One end of the hook body is connected to the tray, the other end of the hook body is connected to the hook part, and one end that is of the hook part and that is away from the hook body is fastened on an end face that is of the bracket and that is away from the tray.

In a specific implementation, a surface that is of the hook part and that is away from the hook body is an inclined surface facing the tray, a stopper is disposed on the bracket, and when the bracket slides to a specified position, the stopper cooperates with the inclined surface to support the bracket. The stopper is disposed, so that the elastic hook and the tray can better support the bracket when the bracket slides to the specified position.

In a specific implementation, different forms may be selected for the guide groove. For example, the guide groove is a slotted hole in the direction away from the tray, and a height of the bottom of the slotted hole is not greater than a height of the stopper.

In a specific implementation, to facilitate a splicing operation, the integrated splicing and termination module further includes a splicing card holder. The splicing card holder is disposed in the tray and is configured to fasten a pigtail and an optical fiber that are to be spliced, the pigtail is mounted at one end of the adapter, and the optical fiber penetrates into the tray from an opening of the tray.

In a specific implementation, to improve a cabling manner of a cable in the tray, the integrated splicing and termination module further includes a guide structure. The guide structure is disposed on the tray, and includes a first guide structure configured to guide the pigtail to one side of the splicing card holder, and a second guide structure configured to guide the optical fiber to the other side of the splicing card holder. The first guide structure includes a first arc-shaped plate and a second arc-shaped plate that are disposed opposite to each other, and concave directions of the first arc-shaped plate and the second arc-shaped plate are opposite. The first arc-shaped plate and the second arc-shaped plate are disposed to form an encircling feature used to guide the pigtail. The second guide structure includes a third arc-shaped plate, and a fourth arc-shaped plate and a fifth arc-shaped plate that are disposed opposite to each other. The third arc-shaped plate is configured to guide the optical fiber from an opening on one side of the tray to the tray, and concave directions of the fourth arc-shaped plate and the fifth arc-shaped plate are opposite. The fourth arc-shaped plate and the fifth arc-shaped plate are disposed to form an encircling feature used to guide the optical fiber.

In a specific implementation, to reduce pollution to the adapter caused by the splicing operation, the integrated splicing and termination module further includes a baffle plate. One end of the baffle plate is connected to the tray, and the other end of the baffle plate extends between the splicing card holder and the adapter to separate the splicing card holder from the adapter. In addition, a channel for passing the pigtail is disposed between a side face of the baffle plate and the tray, so that the pigtail passes through the channel.

In a specific implementation, to improve a cabling manner of the cable in the tray, the integrated splicing and termination module further includes a third guide structure configured to guide a fiber patch cord to one side of the adapter. The third guide structure includes a sixth arc-shaped plate and at least one seventh arc-shaped plate, and concave directions of the sixth arc-shaped plate and the seventh arc-shaped plate are opposite. The sixth arc-shaped plate, the seventh arc-shaped plate, and the side wall of the tray form a channel that is connected to an opening on the other side of the tray and that is configured to accommodate the fiber patch cord, to guide the fiber patch cord to one end of the adapter.

According to a second aspect, an example implementation of this application provides a communications device. The communications device includes a cabinet, where a slot is disposed on the cabinet; and further includes a drawer-like module, where the drawer-like module includes the integrated splicing and termination module according to any one of the foregoing implementations that is slidably assembled in the slot. In addition, the cabinet is connected to the integrated splicing and termination module by using a cable, and the cable is guided into two sides of the adapter by using a guide structure. In the integrated splicing and termination module, a manner of connecting the bracket and the tray is changed and the elastic hook is added. Therefore, the end face of the adapter can be detected and cleaned after the adapter is moved out, and it is convenient to detect and clean the end face of the adapter. Therefore, the communications device having the integrated splicing and termination module is universally applicable in consideration of manufacturing and using costs.

### BRIEF DESCRIPTION OF DRAWINGS

FIG. 1 is a schematic structural diagram of a communications device;
FIG. 2 is a schematic structural diagram of an integrated splicing and termination module;
FIG. 3 is a schematic diagram of a structure in which the integrated splicing and termination module in FIG. 2 is pulled out;
FIG. 4 is a schematic structural diagram of a bracket and a tray in an integrated splicing and termination module according to an implementation of this application;
FIG. 5 is a schematic diagram of a status in which a bracket is disconnected from a tray in an integrated splicing and termination module according to an implementation of this application;
FIG. 6 is another schematic structural diagram of a bracket and a tray in an integrated splicing and termination module according to an implementation of this application;
FIG. 7 is a schematic diagram of a status in which a bracket stops sliding in an integrated splicing and termination module according to an implementation of this application; and
FIG. 8 is another schematic diagram of a status in which a bracket stops sliding in an integrated splicing and termination module according to an implementation of this application.

### DESCRIPTION OF IMPLEMENTATIONS

To make the objectives, technical solutions, and advantages of this invention clearer, the following further describes various implementations in detail with reference to the accompanying drawings.

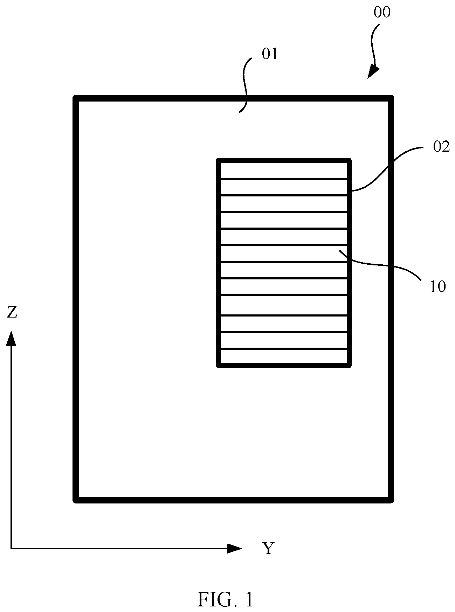

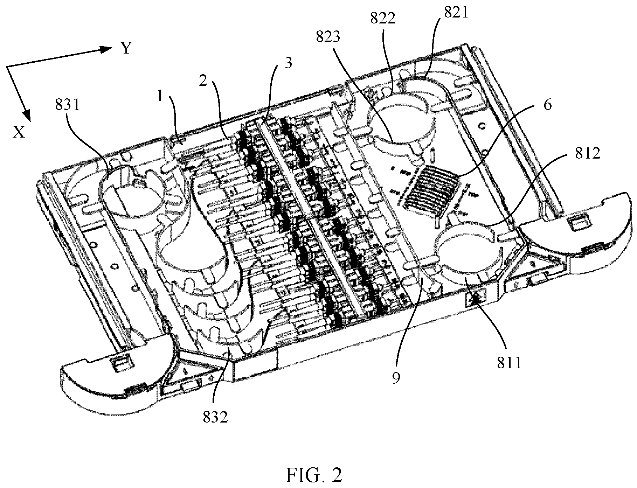

To help understand an integrated splicing and termination module 10 provided in this application, the following first describes an application scenario of the integrated splicing and termination module 10. This application provides a communications device 00. FIG. 1 is a schematic structural diagram of the communications device 00 according to this application. The communications device 00 includes a cabinet 01. A slot 02 is disposed on the cabinet 01, and a plurality of integrated splicing and termination modules 10 are disposed in the slot 02. A plurality of adapters may be disposed in the integrated splicing and termination module 10. The adapters are configured to implement connection of different nodes of an optical cable. Referring to FIG. 2, the integrated splicing and termination module 10 is applied in the cabinet 01 of the communications device 00. During disposing, to ensure connection quality of an optical fiber, an end face of a connector of the adapter needs to be detected and cleaned. However, because the adapter 2 is mounted in a tray 1 by using a bracket 3, space that can be used by a device for detecting and cleaning the end face to operate is relatively small. If the end face is detected and cleaned in the tray, the device for detecting and cleaning the end face interferes with the tray. To resolve the problem of inconvenient detection and cleaning of the end face of the adapter, a structure of the integrated splicing and termination module 10 is improved in this application. The following describes in detail the integrated splicing and termination module 10 provided in this application with reference to the accompanying drawings. For ease of description, it is assumed that a pull-out direction of the integrated splicing and termination module 10 is an X direction, a width direction of the tray 1 is a Y direction, and a pull-out direction of the bracket is a Z direction. In the X direction, the tray 11 has front and rear sides. In the Y direction, the tray 11 has left and right sides.

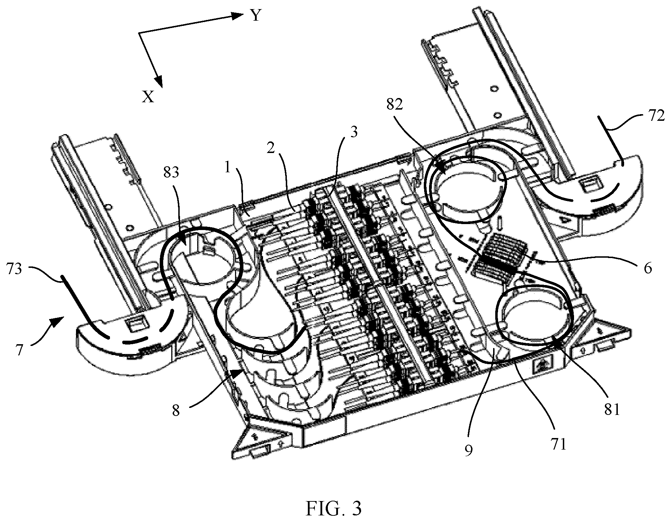

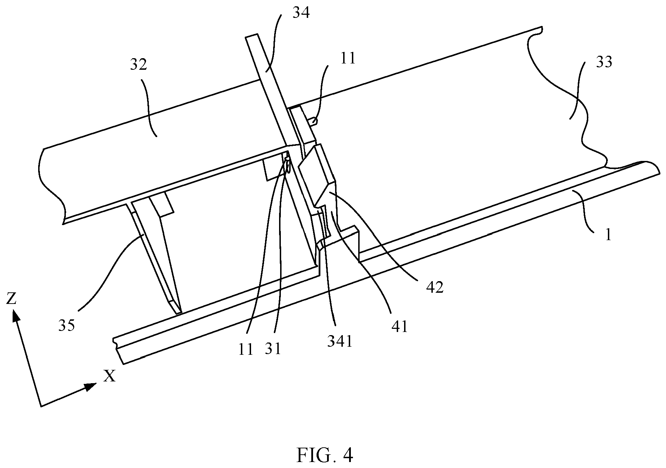

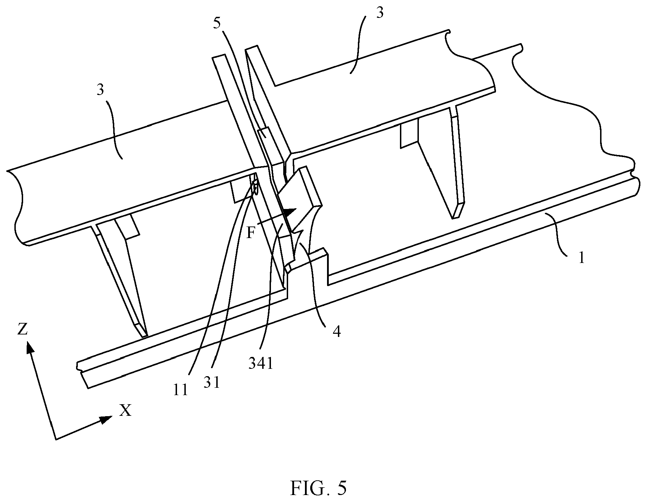

FIG. 2 shows a structure of an integrated splicing and termination module 10 according to this application. The integrated splicing and termination module 10 includes a tray 1. The tray 1 is configured to carry a plurality of adapters 2, and the plurality of adapters 2 are mounted on a bracket 3. FIG. 3 shows a structure in which the integrated splicing and termination module 10 is pulled out according to this application. The bracket 3 includes a top plate 32, a bottom plate 33, and a plurality of side plates. The bracket 3 may be produced through integrated forming. The top plate 32 and the bottom plate 33 are disposed opposite to each other in the Z direction. The plurality of side plates are arranged in the X direction and are separately connected to the top plate 32 and the bottom plate 33 to form a plurality of cavities for accommodating the adapters 2. The adapters 2 are fixedly mounted in the cavities. The side plates include a first side plate 34 located at an edge of the top plate 32 and the bottom plate 33 and a second side plate 35 located between the top plate 32 and the bottom plate 33. The first side plate 34 is connected to the tray 1 to be mounted in the tray 1. FIG. 4 shows a specific structure of the bracket 3, and FIG. 5 shows a structural form of a plurality of brackets 3. For ease of disposing the plurality of brackets 3, the integrated splicing and termination module 10 further includes a spacer plate 5. The spacer plate 5 is disposed on the tray 1. One end of the spacer plate 5 is connected to the tray 1, and the other end of the spacer plate 5 extends in the Z direction to separate the two brackets 3. The spacer plate 5 is connected to the first side plate 34 located on each of both sides of the spacer plate 5, so that the plurality of brackets 3 are mounted in the tray 1.

Still referring to FIG. 3, when the integrated splicing and termination module 10 is pulled out, various operations may be performed in the tray 1, for example, a splicing operation is performed on a pigtail 71 and an optical fiber 72. Because the splicing operation or another operation performed in the tray 1 may affect cleanness of an end face of the adapter 2, the end face of the adapter needs to be detected and cleaned before the tray 1 is pushed back to the cabinet 01. However, to facilitate detection and cleaning of the end face of the adapter 2, in the integrated splicing and termination module 10 provided in this implementation of this application, a manner of mounting the bracket 3 in the tray 1 is changed, and a fixed connection between the bracket and the tray in the prior art is changed to a slidable connection between the bracket 3 and the tray 1. In this way, the bracket 3 is moved out of the tray 1 for operation when necessary, thereby ensuring required operation space. The bracket 3 is slidably mounted on the tray 1. The bracket 3 can be slidably connected to the tray 1 in a plurality of manners, for example, a slidable connection in which a sliding block cooperates with a sliding rail, and a connection in which a gear cooperates with a rack.

FIG. 4 shows a connection structure between the bracket 3 and the tray 1. An implementation of this application according to the claimed invention provides a manner of a guide rod and a guide groove. A guide rod 11 is disposed on the tray 1, and the guide rod 11 is fixedly disposed on the tray 1. A guide groove 31 matching the guide rod 11 is disposed on the bracket 3, and the guide groove 31 is specifically disposed on the first side plate 34. FIG. 5 shows a connection structure between two brackets 3 and the tray 1. To save space and facilitate mounting, guide rods 11 are separately disposed on two side faces of the spacer plate 5 that are opposite to each other in the X direction, and each guide rod 11 is correspondingly slidably connected to the guide groove 31 of the bracket 3. In addition, a structure of the guide groove 31 may be shown in FIG. 4, and may be provided as a through groove that penetrates through a thickness of the first side plate. Certainly, the guide groove 31 may also be a groove having a specific depth. Different forms may be selected as the structure of the guide groove 31. For example, the guide groove 31 is a slotted hole or may be a rectangular hole. The guide rod 11 is mounted in the guide groove 31, and a size of the guide rod 11 is smaller than a groove width of the guide groove 31, so that the guide groove 31 can slide relative to the guide rod 11, and the bracket 3 can slide relative to the tray 1 through relative movement between the guide rod 11 and the guide groove 31. In this way, the adapter 2 is driven to move up from the tray 1 by a distance in the Z direction, and then the end face of the adapter 2 is detected and cleaned, so that the device for cleaning and detecting the end face of the adapter 2 operates in relatively large space.

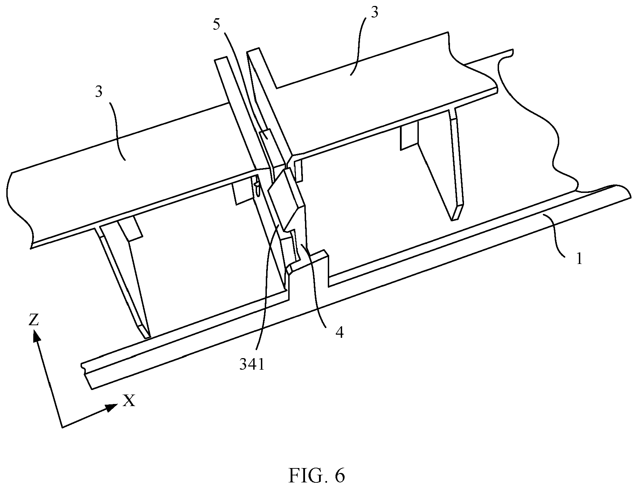

To ensure that the bracket 3 can slide relative to the tray 1 only when the bracket 3 needs to move, and ensure that a sliding action of the bracket 3 relative to the tray 1 is controlled without detaching the bracket 3 from the tray 1, an elastic hook 4 is further disposed on the tray 1, as shown in FIG. 4, FIG. 5, and FIG. 6. FIG. 4 shows a structure of the elastic hook 4, FIG. 5 shows a structural change of the elastic hook, and FIG. 6 shows a matching relationship between the elastic hook 4 and the bracket 3. One end of the elastic hook 4 is fixed in the tray 1, and the other end of the elastic hook 4 is clamped to the bracket 3. During specific disposing, different forms may be selected for the elastic hook 4. As shown in FIG. 4, the elastic hook 4 is a hook structure and includes a hook body 41 and a hook part 42. One end of the hook body 41 is connected to the tray 1, and the other end of the hook body 41 is connected to the hook part 42.

One end that is of the hook part 42 and that is away from the hook body 41 is fastened on an end face 341 that is of the bracket 3 and that is away from the tray 1. The elastic hook 4 has elasticity to some extent, and may be prepared by using a plastic material, or may be prepared by using a rubber material. As shown in FIG. 5, when the elastic hook 4 is subjected to an action force in an F direction, the elastic hook 4 is away from the end face 341 of the bracket 3 in the X direction, so that the elastic hook 4 is detached from the bracket 3, and a clamp function is canceled.

The following describes an entire process of sliding the bracket 3 relative to the tray 1. When the end face of the adapter 2 needs to be detected and cleaned, as shown in FIG. 5, an operator exerts a force on the elastic hook 4. The hook part 42 and the hook body 41 are deformed under the force. Driven by the hook body 41, the hook part 42 moves relative to the tray 1 in the X direction, and is detached from the end surface 341, so that the elastic hook 4 is far away from the bracket 3. In this case, the sliding action of the bracket 3 relative to the tray 1 is unlocked. An operator exerts an action force on the bracket in the Z direction, and the bracket 3 moves upwards in the Z direction under the guidance of the guide rod 11.

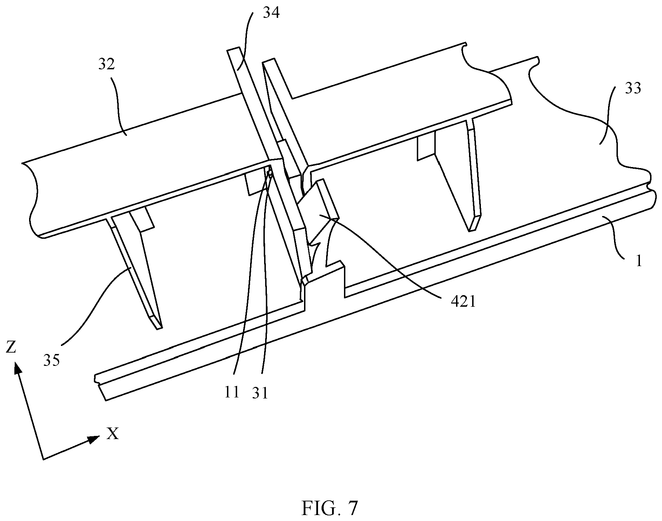

When the bracket 3 slides to a specified height, FIG. 7 shows a position relationship between the bracket 3 and the elastic hook 4. The elastic hook 4 returns to an original position, the tray 1 and the elastic hook 4 are in contact, and the elastic hook 4 supports the bracket 3 to prevent the bracket 3 from falling down, that is, the sliding action of the bracket 3 ends. In this case, the end face of the adapter 2 may be cleaned and detected.

After the end face of the adapter 2 is detected and cleaned, the operator presses the bracket in the reverse direction of the Z direction. The bracket 3 moves downward in the reverse direction of the Z direction under the guidance of the guide rod 11, the bracket 3 returns to the tray 1, and the bracket 3 is fastened when the elastic hook 4 is clamped to the bracket 3, as shown in FIG. 6.

As can be learned from the foregoing description of the sliding process of the bracket 3 relative to the tray 1, by changing the manner of connecting the bracket 3 and the tray 1 and adding the elastic hook 4, the end face of the adapter can be detected and cleaned after the adapter 2 is moved to a proper height relative to the tray 1, without interfering with the structure of the tray 1, thereby facilitating detection and cleaning of the end face of the adapter 2. In addition, the structure of the device for cleaning and detecting the adapter 2 does not need to be changed, thereby reducing costs.

To better clean and detect the end face of the adapter 2, the adapter 2 may be rotated by an angle on the basis of moving the adapter 2 in the Z direction, so that the adapter 2 is in a better position, where the angle may be 40° to 50°. During specific disposing, when only one bracket 3 exists in the tray 1, two guide rods 11 may be disposed on the tray 1, and the two guide rods 11 are disposed opposite to each other in an extension direction parallel to the bracket 3. When a plurality of brackets 3 exist in the tray, two guide rods 11 may be disposed on the tray 1, and two guide rods 11 are disposed on each of two side faces of the spacer plate in the X direction, to ensure that the two guide grooves 31 in each bracket 3 are slidably connected to the guide rod 31. When the bracket 3 is rotated, the two guide rods 11 disposed opposite to each other are used as a rotation axis of rotating the bracket 3, the rotation axis is parallel to the X direction, and the bracket 3 may rotate around the rotation axis by a specific angle relative to the tray 1, which is more convenient for detection and cleaning of the end face of the adapter 2.

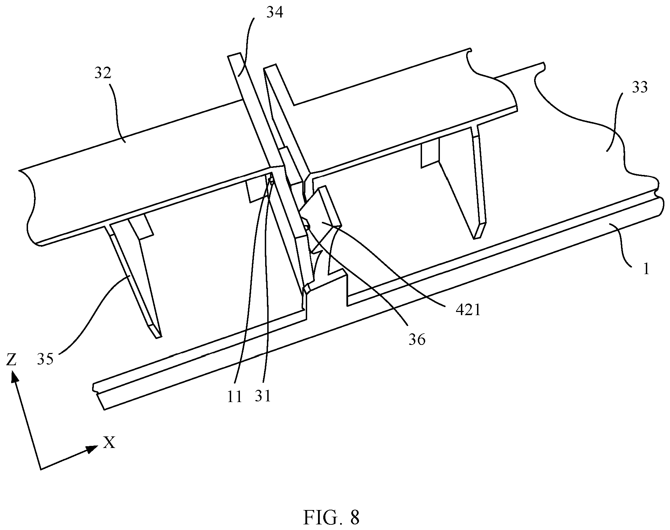

To ensure that the adapter 2 is in a stable state when the end face of the adapter 2 is detected and cleaned, a stopper 36 cooperating with the hook part 42 is disposed on the bracket 3, to prevent the bracket 3 from falling down. FIG. 8 shows a position relationship between the bracket 3 and the elastic hook 4 after the sliding of the bracket 3 is completed. During specific disposing, a surface that is of the hook part 42 and that is away from the hook body 41 is an inclined surface 421 facing the tray 1. The stopper 36 is disposed on the bracket 3 and is limited to be in the Z direction. A height of the stopper 36 is not less than a height of the bottom of the guide groove 31. When the bracket 3 slides to a specified position, the disposing of the stopper 36 can prevent the bracket 3 from falling down, and the stopper 36 cooperates with the inclined surface 421 to support the bracket 3. Therefore, the stopper 36 is disposed, so that when the bracket 3 slides to the specified position, a function of supporting the bracket 3 by the elastic hook 4 and the tray 1 can be better implemented.

During specific disposing, to facilitate a splicing operation, the integrated splicing and termination module 10 further includes a splicing card holder 6. FIG. 2 shows a specific structure of the splicing card holder 6, and FIG. 3 shows a connection relationship between the splicing card holder 6 and a cable. The splicing card holder 6 is fixedly disposed in the tray 1 to fasten the pigtail 71 and the optical fiber 72 to be spliced. One end of the pigtail 71 is mounted on the adapter 2, and the other end of the pigtail 71 enters the splicing card holder 6 for splicing. The optical fiber 72 penetrates into the tray 1 from an opening on a right side of the tray 1 and enters the splicing card holder 6 for splicing. The pigtail 71 and the optical fiber 72 to be spliced are fastened by using the splicing card holder 6, to facilitate a splicing operation and improve splicing efficiency.

FIG. 2 shows a specific structure of a baffle plate 9, and FIG. 3 shows a position relationship between the baffle plate 9 and the tray 1. To reduce pollution to the adapter 2 caused by a splicing operation, the integrated splicing and termination module 10 further includes the baffle plate 9. During specific disposing, one end of the baffle plate 9 is connected to the tray 1, and the other end of the baffle plate 9 penetrates between the splicing card holder 6 and the adapter 2 and extends in the Z direction, to separate the splicing card holder 6 from the adapter 2. On one hand, contaminants that are generated in a splicing operation and that are attached to the end surface of the adapter 2 can be reduced. On the other hand, impact on the splicing card holder 6, the spliced pigtail 71, and the spliced optical fiber 72 can be further reduced when the adapter 2 is detected and cleaned. However, to prevent disposing of the baffle plate 9 from affecting cabling of the pigtail 71, a length of the baffle plate 9 is limited to be less than a length of the tray 1 in the X direction, to form a channel between a side face of the baffle plate 9 and the tray 1, where the channel is used to pass through the pigtail 71.

FIG. 2 shows a specific structure of a guide structure 8, and FIG. 3 shows a position relationship between a cable 7 and the guide structure 8. The integrated splicing and termination module 10 further includes the guide structure 8, and the guide structure 8 is disposed on the tray 1. The guide structure 8 guides the cable 7 in the tray, and a split structure or an integrated structure may be used between the guide structure 8 and the integrated splicing and termination module 10. When the split structure is used, the first guide structure 81 may be fixedly connected to the integrated splicing and termination module 10 by means of bonding, welding, or a connecting piece (a bolt, a screw, or a rivet). When the integrated structure is used, the integrated splicing and termination module 10 may be produced through integrated forming.

FIG. 2 shows a specific structure of a first guide structure 81, and FIG. 3 shows a position relationship between a pigtail 71 and the first guide structure 81. To improve a cabling manner of the pigtail 71 in the tray 1 and avoid disorderly disposing of the pigtail 71 in the tray 1 and impact on a splicing operation, the guide structure 8 includes the first guide structure 81 configured to guide the pigtail 71 to a front side of the splicing card holder 6. The first guide structure 81 includes a first arc-shaped plate 811 and a second arc-shaped plate 812 that are disposed opposite to each other. The first arc-shaped plate 811 and the second arc-shaped plate 812 may be an integrated structure. In this case, the first arc-shaped plate 811 and the second arc-shaped plate 812 are produced through integrated forming. The first arc-shaped plate 811 and the second arc-shaped plate 812 may alternatively be separated structures. In this case, the first arc-shaped plate 811 and the second arc-shaped plate 812 may be connected or may not be connected. When the first arc-shaped plate 811 and the second arc-shaped plate 812 are not connected, the first arc-shaped plate 811 and the second arc-shaped plate 812 are fixedly connected to the tray 1 separately, and adjacent ends of the second arc-shaped plate 812 and the first arc-shaped plate 811 may be in direct contact, or may be spaced by a specific gap. In addition, concave directions of the first arc-shaped plate 811 and the second arc-shaped plate 812 are limited to be opposite. An encircling feature used to guide the pigtail 71 is formed by using outer arc faces of the first arc-shaped plate 811 and the second arc-shaped plate 812. The pigtail 71 is bent and coiled according to the coiling feature, and then enters the splicing card holder 6 for splicing. During specific setting, radiuses of the first arc-shaped plate 811 and the second arc-shaped plate 812 should be greater than a minimum bending radius of the pigtail 71, and the minimum bending radius of the pigtail 71 is a minimum allowed bending radius without damaging the pigtail 71. Certainly, shapes of the first arc-shaped plate 811 and the second arc-shaped plate 812 are not limited to the arc-shaped structures shown in FIG. 2 and FIG. 3, and another form may be used, for example, an S-shaped structure or a U-shaped structure is used, provided that a bending direction of the pigtail 71 can be limited.

FIG. 2 shows a specific structure of a second guide structure 82, and FIG. 3 shows a position relationship between the optical fiber 72 and the second guide structure 82. To improve a cabling manner of the optical fiber 72 in the tray 1 and avoid disorderly disposing of the optical fiber 72 in the tray 1 and impact on a splicing operation, the guide structure 8 further includes the second guide structure 82 configured to guide the optical fiber 72 to a rear side of the splicing card holder 6. The second guide structure 82 includes a third arc-shaped plate 821, and a fourth arc-shaped plate 822 and a fifth arc-shaped plate 823 that are disposed opposite to each other. The third arc-shaped plate 821 is configured to guide the optical fiber 72 from an opening on a right side of the tray 1 to the tray 1. The third arc-shaped plate 821, the fourth arc-shaped plate 822, and the fifth arc-shaped plate 823 may be an integrated structure. In this case, the third arc-shaped plate 821, the fourth arc-shaped plate 822, and the fifth arc-shaped plate 823 are produced through integrated forming. The third arc-shaped plate 821, the fourth arc-shaped plate 822, and the fifth arc-shaped plate 823 may alternatively be separated structures. In this case, the third arc-shaped plate 821 and the fourth arc-shaped plate 822 may be connected or may not be connected. When the third arc-shaped plate 821 and the fourth arc-shaped plate 822 are not connected, the third arc-shaped plate 821 and the fourth arc-shaped plate 822 are fixedly connected to the tray 1 separately, and adjacent ends of the third arc-shaped plate 821 and the fourth arc-shaped plate 822 may be in direct contact, or may be spaced by a specific gap. Similarly, the fourth arc-shaped plate 822 and the fifth arc-shaped plate 823 may be connected or may not be connected. When the fourth arc-shaped plate 822 and the fifth arc-shaped plate 823 are not connected, the fourth arc-shaped plate 822 and the fifth arc-shaped plate 823 are fixedly connected to the tray 1 separately, and adjacent ends of the fourth arc-shaped plate 822 and the fifth arc-shaped plate 823 may be in direct contact, or may be spaced by a specific gap. In addition, concave directions of the fourth arc-shaped plate 822 and the fifth arc-shaped plate 823 are limited to be opposite. An encircling feature used to guide the optical fiber 72 is formed by using outer arc faces of the fourth arc-shaped plate 822 and the fifth arc-shaped plate 823. The optical fiber 72 guided into the tray 1 by the third arc-shaped plate 821 is bent and coiled according to the coiling feature, and then enters the splicing card holder 6 for splicing. In specific setting, radiuses of the third arc-shaped plate 821, the fourth arc-shaped plate 822, and the fifth arc-shaped plate 823 should be greater than a minimum bending radius of the optical fiber 72. The minimum bending radius of the optical fiber 72 is a minimum allowed bending radius without damaging the optical fiber 72. Certainly, shapes of the third arc-shaped plate 821, the fourth arc-shaped plate 822, and the fifth arc-shaped plate 823 are not limited to the arc-shaped structures shown in FIG. 2 and FIG. 3, and another form may be used, for example, an S-shaped or a U-shaped structure is used, provided that a bending direction of the optical fiber 72 can be limited.

FIG. 2 shows a specific structure of a third guide structure 83, and FIG. 3 shows a position relationship between a fiber patch cord 73 and the third guide structure 83. To improve a cabling manner of the fiber patch cord 73 in the tray 1 and avoid disorderly disposing of the fiber patch cord 73 in the tray 1 and impact on a splicing operation, the guide structure 8 includes the third guide structure 83 configured to guide the fiber patch cord 73 to a side of the adapter 2. The third guide structure 83 includes a sixth arc-shaped plate 831 and at least one seventh arc-shaped plate 832. The sixth arc-shaped plate 831 and the seventh arc-shaped plate 832 may be an integrated structure. In this case, the sixth arc-shaped plate 831 and the seventh arc-shaped plate 832 are produced through integrated forming. The sixth arc-shaped plate 831 and the seventh arc-shaped plate 832 may alternatively be separated structures. In this case, the sixth arc-shaped plate 831 and the seventh arc-shaped plate 832 may be connected or may not be connected. When the sixth arc-shaped plate 831 and the seventh arc-shaped plate 832 are not connected, the sixth arc-shaped plate 831 and the seventh arc-shaped plate 832 are fixedly connected to the tray 1 separately, and adjacent ends of the sixth arc-shaped plate 831 and the seventh arc-shaped plate 832 may be in direct contact, or may be spaced by a specific gap. In addition, concave directions of the sixth arc-shaped plate 831 and the seventh arc-shaped plate 832 are limited to be opposite. A channel is formed between outer arc faces of the sixth arc-shaped plate 831 and the seventh arc-shaped plate 832 and a side wall of the tray 1. The channel is connected to the opening on the left side of the tray 1, and is configured to accommodate the fiber patch cord 73 and guide the fiber patch cord 73 to the left end of the adapter 2. During specific setting, radiuses of the sixth arc-shaped plate 831 and the seventh arc-shaped plate 832 should be greater than a minimum bending radius of the fiber patch cord 73, and the minimum bending radius of the fiber patch cord 73 is a minimum allowed bending radius without damaging the fiber patch cord 73. Certainly, shapes of the sixth arc-shaped plate 831 and the seventh arc-shaped plate 832 are not limited to the arc-shaped structures shown in FIG. 2 and FIG. 3, and another form may be used, for example, an S-shaped structure or a U-shaped structure is used, provided that a bending direction of the fiber patch cord 73 can be limited.

In addition, an implementation of this application provides a communications device 00. FIG. 1 is a schematic structural diagram of the communications device 00. The communications device 00 includes a cabinet 01, and a slot 02 is disposed on the cabinet 01. There may be one or more slots 02, and when a plurality of slots are used, the plurality of slots 02 are arranged in a height direction of the cabinet 01, that is, arranged in the Z direction. Each slot 02 is slidably connected to a drawer-like module, and the drawer-like module may be pulled into or pulled out from the slot 02. During specific disposing, each drawer-like module includes the integrated splicing and termination module 10 according to any one of the foregoing implementations that is slidably assembled in the slot 02. In addition, the cabinet 01 is connected to the integrated splicing and termination module 10 by using a cable 7. During connection, two ends of the cable 7 are respectively connected to the cabinet 01 and the adapter 2, and the cable 7 is guided into two sides of the adapter 2 by using the guide structure 8. As can be learned from the foregoing description, by changing the manner of connecting the bracket 3 and the tray 1 and adding the elastic hook 4 in the integrated splicing and termination module 10, the end face of the adapter 2 can be detected and cleaned after the adapter 2 is moved to a proper height relative to the tray 1, without interfering with the structure of the tray 1, thereby facilitating detection and cleaning of the end face of the adapter 2. In addition, the structure of the device for cleaning and detecting the adapter 2 does not need to be changed, thereby reducing costs. Therefore, the communications device 00 having the integrated splicing and termination module 10 is universally applicable in consideration of manufacturing and using costs.

The scope of protection shall be defined by the appended claims.

## Claims

1. An integrated splicing and termination module (10), comprising a tray (1) and a bracket (3) on which an adapter (2) is mounted, wherein the adapter is configured to implement connection of different nodes of an optical cable, wherein an elastic hook (4) is disposed on the tray, and the bracket is slidably mounted on the tray and is clamped to the elastic hook; when the elastic hook is detached from the bracket, the bracket slides in a direction away from the tray; and when the bracket slides to a specified position, the elastic hook cooperates with the tray to support the bracket;
wherein at least one guide rod (11) is disposed on the tray, a guide groove (31) is disposed on the bracket, the guide rod is disposed in the guide groove, and the guide rod is slidably connected to the guide groove;
wherein the integrated splicing and termination module further comprises a spacer plate (5), wherein the spacer plate is disposed on the tray and is configured to separate two brackets, the guide rod is disposed on two opposite side faces of the spacer plate, and one guide rod is slidably connected to a guide groove of one bracket.

2. The integrated splicing and termination module according to claim 1, wherein the bracket comprises a top plate (32) and a bottom plate (33) that are disposed opposite to each other, and a plurality of side plates (34, 35), every two of the side plates are connected to the top plate and the bottom plate to form a cavity configured to mount the adapter, and the guide groove is disposed on two side plates located at an edge of the top plate.

3. The integrated splicing and termination module according to any one of claims 1 and 2, wherein the elastic hook is a hook structure and comprises a hook body (41) and a hook part (42); one end of the hook body is connected to the tray, and the other end is connected to the hook part; and one end that is of the hook part and that is away from the hook body is fastened on an end surface that is of the bracket and that is away from the tray.

4. The integrated splicing and termination module according to claim 3, wherein a surface that is of the hook part and that is away from the hook body is an inclined surface facing the tray, a stopper (36) is disposed on the bracket, and when the bracket slides to a specified position, the stopper cooperates with the inclined surface to support the bracket.

5. The integrated splicing and termination module according to claim 4, wherein the guide groove is a slotted hole, and a height of the bottom of the slotted hole is not greater than a height of the stopper in the direction away from the tray.

6. The integrated splicing and termination module according to any one of claims 1 to 5, further comprising a splicing card holder (6), wherein the splicing card holder is disposed in the tray and is configured to fasten a pigtail and an optical fiber that are to be spliced, the pigtail is mounted on one end of the adapter, and the optical fiber penetrates into the tray from an opening of the tray.

7. The integrated splicing and termination module according to claim 6, further comprising a guide structure (8), wherein the guide structure is disposed on the tray, and comprises a first guide structure (81) configured to guide the pigtail to one side of the splicing card holder, and a second guide structure (82) configured to guide the optical fiber to the other side of the splicing card holder; wherein
the first guide structure comprises a first arc-shaped plate and a second arc-shaped plate that are disposed opposite to each other, and concave directions of the first arc-shaped plate and the second arc-shaped plate are opposite; and
the second guide structure comprises a third arc-shaped plate (821), and a fourth arc-shaped plate (822) and a fifth arc-shaped plate (823) that are disposed opposite to each other, the third arc-shaped plate is configured to guide the optical fiber from an opening on one side of the tray to the tray, and concave directions of the fourth arc-shaped plate and the fifth arc-shaped plate are opposite.

8. The integrated splicing and termination module according to claim 6 or 7, further comprising a baffle plate (9), wherein one end of the baffle plate is connected to the tray, and the other end of the baffle plate extends between the splicing card holder and the adapter to separate the splicing card holder from the adapter; and a channel for passing the pigtail is disposed between a side face of the baffle plate and the tray.

9. The integrated splicing and termination module according to claim 7, wherein the integrated splicing and termination module further comprises a third guide structure (83) configured to guide a fiber patch cord (73) to one side of the adapter; the third guide structure comprises a sixth arc-shaped plate (831) and at least one seventh arc-shaped plate (832), and concave directions of the sixth arc-shaped plate and the seventh arc-shaped plate are opposite; and the sixth arc-shaped plate, the seventh arc-shaped plate, and a side wall of the tray form a channel that is connected to an opening on the other side of the tray and that is configured to accommodate the fiber patch cord.

10. A communications device (00), comprising:
a cabinet (01), wherein a slot (02) is disposed on the cabinet;
a drawer-like module, comprising the integrated splicing and termination module according to any one of claims 1 to 9 that is slidably assembled in the slot; and
a cable (7), wherein two ends of the cable are respectively connected to the cabinet and the adapter, and the cable is guided to the adapter by using the guide structure.

## Patentansprüche

1. Integriertes Spleiß- und Abschlussmodul (10), umfassend eine Ablage (1) und eine Halterung (3), auf der ein Adapter (2) montiert ist, wobei der Adapter dazu konfiguriert ist, eine Verbindung von unterschiedlichen Knoten eines optischen Kabels zu implementieren, wobei ein elastischer Haken (4) auf der Ablage angeordnet ist und die Halterung verschiebbar auf der Ablage montiert ist und an den elastischen Haken geklemmt ist;
wobei, wenn der elastische Haken von der Halterung gelöst ist, die Halterung in eine von der Ablage abgewandte Richtung gleitet; und wobei, wenn die Halterung in eine spezifizierte Position gleitet, der elastische Haken mit der Ablage zusammenwirkt, um die Halterung zu stützen;
wobei mindestens eine Führungsstange (11) auf der Ablage angeordnet ist, eine Führungsnut (31) an der Halterung angeordnet ist, die Führungsstange in der Führungsnut angeordnet ist und die Führungsstange verschiebbar mit der Führungsnut verbunden ist;
wobei das integrierte Spleiß- und Abschlussmodul ferner eine Abstandsplatte (5) umfasst, wobei die Abstandsplatte auf der Ablage angeordnet ist und dazu konfiguriert ist, zwei Halterungen zu trennen, die Führungsstange auf zwei gegenüberliegenden Seitenflächen der Abstandsplatte angeordnet ist und eine Führungsstange verschiebbar mit einer Führungsnut einer Halterung verbunden ist.

2. Integriertes Spleiß- und Abschlussmodul nach Anspruch 1, wobei die Halterung eine obere Platte (32) und eine untere Platte (33), die einander gegenüberliegend angeordnet sind, und eine Vielzahl von Seitenplatten (34, 35) umfasst, wobei jeweils zwei der Seitenplatten mit der oberen Platte und der unteren Platte verbunden sind, um einen Hohlraum zu bilden, der zum Montieren des Adapters konfiguriert ist, und wobei die Führungsnut auf zwei Seitenplatten angeordnet ist, die sich an einem Rand der oberen Platte befinden.

3. Integriertes Spleiß- und Abschlussmodul nach einem der Ansprüche 1 und 2, wobei der elastische Haken eine Hakenstruktur ist und einen Hakenkörper (41) und ein Hakenteil (42) umfasst; ein Ende des Hakenkörpers mit der Ablage verbunden ist und das andere Ende mit dem Hakenteil verbunden ist; und ein Ende des Hakenteils, das von dem Hakenkörper entfernt ist, an einer Endfläche befestigt ist, die von der Halterung und von der Ablage entfernt ist.

4. Integriertes Spleiß- und Abschlussmodul nach Anspruch 3, wobei eine Fläche des Hakenteils, die von dem Hakenkörper entfernt ist, eine geneigte Fläche ist, die der Ablage zugewandt ist, ein Stopper (36) an der Halterung angeordnet ist und wenn die Halterung in eine bestimmte Position gleitet, der Stopper mit der geneigten Fläche zusammenwirkt, um die Halterung zu stützen.

5. Integriertes Spleiß- und Abschlussmodul nach Anspruch 4, wobei die Führungsnut ein Langloch ist und die Höhe des Bodens des Langlochs nicht größer ist als die Höhe des Stoppers in der von der Ablage abgewandten Richtung.

6. Integriertes Spleiß- und Abschlussmodul nach einem der Ansprüche 1 bis 5, ferner umfassend einen Spleißkartenhalter (6), wobei der Spleißkartenhalter in der Ablage angeordnet ist und dazu konfiguriert ist, ein Pigtail und eine optische Faser zu befestigen, die zu spleißen sind, wobei das Pigtail an einem Ende des Adapters montiert ist und die optische Faser von einer Öffnung der Ablage in die Ablage eindringt.

7. Integriertes Spleiß- und Abschlussmodul nach Anspruch 6, ferner umfassend eine Führungsstruktur (8), wobei die Führungsstruktur auf der Ablage angeordnet ist und eine erste Führungsstruktur (81), die dazu konfiguriert ist, den Pigtail zu einer Seite des Spleißkartenhalters zu führen, und eine zweite Führungsstruktur (82) umfasst, die dazu konfiguriert ist, die optische Faser zu der anderen Seite des Spleißkartenhalters zu führen; wobei
die erste Führungsstruktur eine erste bogenförmige Platte und eine zweite bogenförmige Platte umfasst, die einander gegenüberliegend angeordnet sind, und die konkaven Richtungen der ersten bogenförmigen Platte und der zweiten bogenförmigen Platte entgegengesetzt sind; und
die zweite Führungsstruktur eine dritte bogenförmige Platte (821) und eine vierte bogenförmige Platte (822) und eine fünfte bogenförmige Platte (823) umfasst, die einander gegenüberliegend angeordnet sind, die dritte bogenförmige Platte dazu konfiguriert ist, die optische Faser von einer Öffnung auf einer Seite der Ablage zur Ablage zu führen, und die konkaven Richtungen der vierten bogenförmigen Platte und der fünften bogenförmigen Platte entgegengesetzt sind.

8. Integriertes Spleiß- und Abschlussmodul nach Anspruch 6 oder 7, ferner umfassend eine Ablenkplatte (9), wobei ein Ende der Ablenkplatte mit dem Tablett verbunden ist und sich das andere Ende der Ablenkplatte zwischen dem Spleißkartenhalter und dem Adapter erstreckt, um den Spleißkartenhalter von dem Adapter zu trennen; und ein Kanal zum Durchführen des Pigtails zwischen einer Seitenfläche der Ablenkplatte und der Ablage angeordnet ist.

9. Integriertes Spleiß- und Abschlussmodul nach Anspruch 7, wobei das integrierte Spleiß- und Abschlussmodul ferner eine dritte Führungsstruktur (83) umfasst, die dazu konfiguriert ist, ein Faser-Patchkabel (73) zu einer Seite des Adapters zu führen; die dritte Führungsstruktur eine sechste bogenförmige Platte (831) und mindestens eine siebte bogenförmige Platte (832) umfasst, und die konkaven Richtungen der sechsten bogenförmigen Platte und der siebten bogenförmigen Platte entgegengesetzt sind; und die sechste bogenförmige Platte, die siebte bogenförmige Platte und eine Seitenwand der Ablage einen Kanal bilden, der mit einer Öffnung auf der anderen Seite der Ablage verbunden ist und der dazu konfiguriert ist, das Faser-Patchkabel aufzunehmen.

10. Kommunikationsvorrichtung (00), umfassend:
ein Gehäuse (01), wobei ein Schlitz (02) an dem Gehäuse angeordnet ist;
ein schubladenartiges Modul, umfassend das integrierte Spleiß- und Abschlussmodul nach einem der Ansprüche 1 bis 9, das verschiebbar in dem Schlitz angebracht ist; und
ein Kabel (7), wobei zwei Enden des Kabels jeweils mit dem Gehäuse und dem Adapter verbunden sind und das Kabel unter Verwendung der Führungsstruktur zu dem Adapter geführt wird.

## Revendications

1. Module d'épissure et de terminaison intégré (10), comprenant un plateau (1) et un support (3) sur lequel un adaptateur (2) est monté, dans lequel l'adaptateur est configuré pour mettre en œuvre la connexion de différents nœuds d'un câble optique, dans lequel un crochet élastique (4) est disposé sur le plateau, et le support est monté de manière coulissante sur le plateau et est fixé au crochet élastique ; lorsque le crochet élastique est détaché du support, le support coulisse dans une direction opposée au plateau ; et lorsque le support coulisse vers une position spécifiée, le crochet élastique coopère avec le plateau pour soutenir le support ;
dans lequel au moins une tige de guidage (11) est disposée sur le plateau, une rainure de guidage (31) est disposée sur le support, la tige de guidage est disposée dans la rainure de guidage, et la tige de guidage est reliée de manière coulissante à la rainure de guidage ;
dans lequel le module d'épissure et de terminaison intégré comprend également une plaque d'espacement (5), dans lequel la plaque d'espacement est disposée sur le plateau et est configurée pour séparer deux supports, la tige de guidage est disposée sur deux faces latérales opposées de la plaque d'espacement, et une tige de guidage est reliée de manière coulissante à une rainure de guidage d'un support.

2. Module d'épissure et de terminaison intégré selon la revendication 1, dans lequel le support comprend une plaque supérieure (32) et une plaque inférieure (33) qui sont disposées en face l'une de l'autre, et une pluralité de plaques latérales (34, 35), chaque paire de plaques latérales est reliée à la plaque supérieure et à la plaque inférieure pour former une cavité configurée pour monter l'adaptateur, et la rainure de guidage est disposée sur deux plaques latérales situées sur un bord de la plaque supérieure.

3. Module d'épissure et de terminaison intégré selon l'une quelconque des revendications 1 et 2, dans lequel le crochet élastique est une structure de crochet et comprend un corps de crochet (41) et une partie de crochet (42) ; une extrémité du corps de crochet est reliée au plateau, et l'autre extrémité est reliée à la partie de crochet ; et une extrémité qui est de la partie de crochet et qui est éloignée du corps de crochet est fixée sur une surface d'extrémité qui est du support et qui est éloignée du plateau.

4. Module d'épissure et de terminaison intégré selon la revendication 3, dans lequel une surface qui est de la partie crochet et qui est éloignée du corps du crochet est une surface inclinée faisant face au plateau, une butée (36) est disposée sur le support, et lorsque le support coulisse vers une position spécifiée, la butée coopère avec la surface inclinée pour soutenir le support.

5. Module d'épissure et de terminaison intégré selon la revendication 4, dans lequel la rainure de guidage est un trou fendu, et une hauteur du fond du trou fendu n'est pas supérieure à une hauteur de la butée dans la direction s'éloignant du plateau.

6. Module d'épissure et de terminaison intégré selon l'une quelconque des revendications 1 à 5, comprenant également un support de carte d'épissure (6), dans lequel le support de carte d'épissure est disposé dans le plateau et est configuré pour fixer un pigtail et une fibre optique qui doivent être épissés, le pigtail est monté sur une extrémité de l'adaptateur, et la fibre optique pénètre dans le plateau à partir d'une ouverture du plateau.

7. Module d'épissure et de terminaison intégré selon la revendication 6, comprenant également une structure de guidage (8), dans lequel la structure de guidage est disposée sur le plateau, et comprend une première structure de guidage (81) configurée pour guider le pigtail vers un côté du support de carte d'épissure, et une deuxième structure de guidage (82) configurée pour guider la fibre optique vers l'autre côté du support de carte d'épissure ; dans lequel
la première structure de guidage comprend une première plaque en forme d'arc et une deuxième plaque en forme d'arc qui sont disposées en face l'une de l'autre, et les directions concaves de la première plaque en forme d'arc et de la deuxième plaque en forme d'arc sont opposées ; et
la deuxième structure de guidage comprend une troisième plaque en forme d'arc (821), et une quatrième plaque en forme d'arc (822) et une cinquième plaque en forme d'arc (823) qui sont disposées en face l'une de l'autre, la troisième plaque en forme d'arc est configurée pour guider la fibre optique d'une ouverture sur un côté du plateau vers le plateau, et les directions concaves de la quatrième plaque en forme d'arc et de la cinquième plaque en forme d'arc sont opposées.

8. Module d'épissure et de terminaison intégré selon la revendication 6 ou 7, comprenant également une plaque déflectrice (9), dans lequel une extrémité de la plaque déflectrice est reliée au plateau, et l'autre extrémité de la plaque déflectrice se prolonge entre le support de carte d'épissure et l'adaptateur pour séparer le support de carte d'épissure de l'adaptateur ; et un canal de passage du pigtail est disposé entre une face latérale de la plaque déflectrice et le plateau.

9. Module d'épissure et de terminaison intégré selon la revendication 7, dans lequel le module d'épissure et de terminaison intégré comprend également une troisième structure de guidage (83) configurée pour guider un cordon de raccordement de fibre (73) vers un côté de l'adaptateur ; la troisième structure de guidage comprend une sixième plaque arquée (831) et au moins une septième plaque arquée (832), les directions concaves de la sixième et de la septième plaque arquée sont opposées ; et la sixième plaque arquée, la septième plaque arquée et une paroi latérale du plateau forment un canal qui est relié à une ouverture de l'autre côté du plateau et qui est configuré pour recevoir le cordon de raccordement de fibre.

10. Dispositif de communication (00), comprenant :
une armoire (01), dans lequel une fente (02) est disposée sur l'armoire ;
un module de type tiroir, comprenant le module d'épissure et de terminaison intégré selon l'une quelconque des revendications 1 à 9 qui est assemblé de manière coulissante dans la fente ; et
un câble (7), dans lequel deux extrémités du câble sont respectivement connectées à l'armoire et à l'adaptateur, et le câble est guidé vers l'adaptateur en utilisant la structure de guidage.
